# EUROPÄISCHE PATENTSCHRIFT

(11) **EP 1 128 100 B1**
(45) Veröffentlichungstag und Bekanntmachung des Hinweises auf die Patenterteilung: **09.04.2003**
(21) Anmeldenummer: 01104944.2
(22) Anmeldetag: 28.02.2001
(51) Int. Cl.: F16J 15/16, A46B 3/02

(54) **Bürste für eine Bürstendichtung**
Brush for brushsealings
Balai pour un garniture d'étanchéité à balai

(30) Priorität: 28.02.2000 DE 10009432
(43) Veröffentlichungstag der Anmeldung: 29.08.2001
(73) Patentinhaber: MTU Aero Engines GmbH, 80995 München (DE)
(72) Erfinder: Beichl, Stefan, 82211 Herrsching (DE)

(56) Entgegenhaltungen:
- EP-A- 0 121 797
- EP-A- 0 427 629
- EP-A- 0 765 619
- DE-C- 19 641 374
- US-A- 4 795 677
- US-A- 4 863 773
- US-A- 5 051 300
- US-A- 5 183 197

## Beschreibung

Die Erfindung betrifft eine Bürste für eine Bürstendichtung, mit einer Vielzahl von definiert angeordneten, keramischen Fasern, gemäß dem Oberbegriff des Patentanspruches 1.

Bürstendichtungen zählen zu den nicht-hermetischen Dichtungsbauarten, da sie in der Regel mit einer gewissen Leckage arbeiten, falls unterschiedliche Drücke auf beiden Dichtungsseiten herrschen. Durch die elastische Nachgiebigkeit der Borsten sind sie besonders unempfindlich gegenüber Lageabweichungen der Bauteile zueinander, z.B. Exzentrizität, und arbeiten mit geringem Verschleiß und geringer Reibung. Ein wichtiges Einsatzfeld für Bürstendichtungen sind Rotor-Stator-Dichtstellen in Turbomaschinen. Es leuchtet ein, dass die Eigenschaften einer Bürstendichtung zu einem großen Teil von den Eigenschaften der Borsten abhängen, wobei neben der Borstengeometrie vor allem das Borstenmaterial zu beachten ist. Kriterien wie Dauerelastizität, Verschleißfestigkeit, Temperatur- und Medienbeständigkeit, Bruchsicherheit usw. spielen hier eine Rolle. Es ist bekannt, Borsten aus Kunststoff, Metall oder Keramik zu verwenden, ggf. auch in Kombination. Von Keramikborsten erhofft man sich insbesondere eine hohe Medien- und Temperaturbeständigkeit, eine große Verschleißfestigkeit und weitestgehende Dauerelastizität. Infolge ihrer Steifigkeit und Sprödheit ergeben sich aber auch Probleme. Keramikborsten/-fasern sind weniger leicht elastisch und überhaupt nicht plastisch verformbar, sie dürfen auch nicht um enge Radien gebogen, d.h. geknickt werden, da Bruchgefahr besteht. Ein weiteres Problem ist die Einspannung bzw. Fixierung der Borsten/Fasern in der zur Bildung der Bürste erforderlichen Lage und Verteilung. Bei Metallen übliche Fügeverfahren wie Schweissen und Löten sind bei rein keramischen Fasern nicht bzw. nur mit großen Einschränkungen einsetzbar. Es besteht die Möglichkeit, Keramikfasern oberflächlich zu metallisieren, so dass eine bessere Benetzbarkeit durch schmelzflüssige Metalle, z.B. Lote, erzielt wird. Das Metallisieren der Fasern ist jedoch aufwendig, außerdem werden die Fasereigenschaften verändert.
Aus der Patentschrift DE 196 41 374 C1 ist ein Verfahren samt Vorrichtung zur Herstellung von Bürstendichtungen bekannt, bei dem abgelängte Borsten in definierter Lage und Verteilung auf eine bzw. zwischen zwei Bürstenwangen gelegt und stoffschlüssig miteinander sowie mit den Bürstenwangen verbunden werden. Auch keramische Borsten sind auf diese Weise verarbeitbar, wobei der Stoffschluss beispielsweise durch einen geeigneten Kleber erzielt wird. Klebstoffe, beispielsweise solche auf Kunstharzbasis, weisen häufig eine unbefriedigende Medien- und Temperaturbeständigkeit auf, teilweise neigen diese auch zum Kriechen bzw. Schrumpten. Keramische, zementartige Kleber zeigen oft ungenügende Haftung und neigen zum Abplatzen bzw. zu Rissbildung bis hin zur Desintegration.

Unter den keramischen Fasern sind die Siliziumkarbidfasern (SiC-Fasern) eigenschaftsbedingt von besonderem Interesse. Man hat bereits versucht, SiC-Fasern mit Glasloten zu verbinden. Die Fasereigenschaften wurden aber durch Versprödung so verschlechtert, dass diese Verbindungsmethode nicht weiter verfolgt wurde.

Es sind auch Bürstendichtungen bekannt, bei denen die Borsten/Fasern kraftschlüssig, d.h. durch Reibung unter Einwirkung von Klemm- bzw. Spannkräften, gehalten werden. Bei harten, wenig nachgiebigen und reibungsarmen Keramikfasern wären hierzu hohe Kräfte und Fertigungsgenauigkeiten erforderlich, wobei auch wieder Knick und Bruchgefahr bestünde. Ein Lösen weniger Fasern könnte die Desintegration/Zerstörung der gesamten Bürste zur Folge haben.

Auf einem anderen technischen Gebiet, nämlich der Herstellung von hochfesten Faserverbundbauteilen, sind für Hochtemperaturanwendungen sogenannte CMC's (Carbon Matrix Composites) bekannt. Dabei handelt es sich in der Regel um hochfeste Kohlefaserstrukturen (Rovings, Gewebe, Gestricke etc.) in einer Kohlenstoffmatrix, d.h. um einen Kohlenstoff/Kohlenstoff-Verbund (C/C, Carbon/Carbon). Die Kohlenstoffmatrix kann zumindest teilweise durch Pyrolyse eines Precursorharzes, d.h. eines geeigneten, kohlenstoffhaltigen Kunstharzes (Kohlenstoffvorläufers), erzeugt werden.
Siehe hierzu die Patentschrift EP 0 598 631 B1. Dieser ist weiter zu entnehmen, dass als Oxidationsschutz für die Kohlenstoffstruktur kristallines, pulverförmiges SiC in die Struktur integriert werden sollte und zwar räumlich verteilt. Ausgehend von dem beschriebenen Stand der Technik besteht die Aufgabe der Erfindung darin, eine Bürste für eine Bürstendichtung bereitzustellen, die sich durch eine besonders dauerhafte, formstabile, medien- und temperaturresistente und faserschonende Matrix für die keramischen Borsten/Fasern auszeichnet.

Diese Aufgabe wird durch die in Anspruch 1 gekennzeichneten Merkmale gelöst, in Verbindung mit den gattungsbildenden Merkmalen in dessen Oberbegriff.
Es hat sich gezeigt, dass eine durch Pyrolyse aus einem Precursorharz erzeugte Kohlenstoffmatrix bei hoher Festigkeit und Dauerhaftigkeit eine schonende Einbettung der knick- und kerbempfindlichen Keramikfasern ermöglicht im Hinblick auf eine hohe mechanische Belastbarkeit und Lebensdauer der Bürste und somit der Bürstendichtung insgesamt.

In den Unteransprüchen sind vorteilhafte Ausgestaltungen der Erfindung gekennzeichnet.

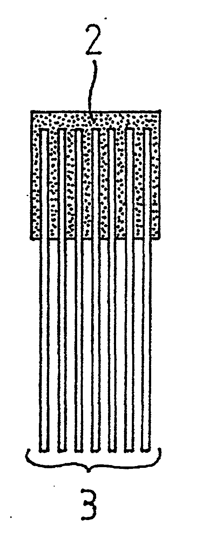

Die Erfindung wird anschließend anhand der Figur noch näher erläutert. Diese zeigt in vereinfachter, nicht näher maßstäblicher Darstellung einen Querschnitt durch eine Bürste mit mehreren Borstenreihen.
Die Bürste 1 umfasst eine Vielzahl von keramischen Fasern 3, welche in definierter Orientierung und Verteilung in einer einen Festkörper bildenden Matrix 2 fixiert sind. Üblicherweise steht der längere Teil der Fasern 3 frei aus der Matrix heraus. Da Bürstendichtungen zumeist mit rotationssymmetrischen oder ebenen Bauteiloberflächen zusammenwirken, überwiegen kreisringförmige und stabförmige Bauarten. Somit wird die konsolidierte Matrix 2 in der Regel einen Kreisring, ein Kreisringsegment oder einen geraden Stab endlicher Länge bilden. Die hier als separate, parallele Reihen gezeigten Fasern 3 (Borsten) können auch weitgehend ohne seitlichen Abstand, d.h. aneinanderliegend, angeordnet sein im Hinblick auf gegenseitige Abstützung und verstärkte Dichtwirkung. Die Fasern der verschiedenen Reihen können unterschiedliche Dicke und unterschiedliche Materialeigenschaften aufweisen. Generell wird eine möglichst gleichmäßige Faserverteilung angestrebt, wobei die Orientierung von Reihe zu Reihe verschieden sein kann. All dies ist dem Fachmann geläufig und soll hier nicht näher erörtert werden.

Die konsolidierte Matrix 2 mit den stoffschlüssig fixierten Fasern 3 wird üblicherweise in ein Dichtungsgehäuse (nicht dargestellt) integriert, welches beispielsweise aus mehreren Metallteilen zusammengesetzt wird. Dabei ist es auch möglich, mehrere Matrix/Fasereinheiten in einem Gehäuse zusammenzufassen, z.B. um die Zahl der Borstenreihen zu erhöhen.

Die Matrix 2 besteht erfindungsgemäß großteils oder vollständig aus Kohlenstoff, der pyrolytisch aus einem geeigneten Kunstharz erzeugt wurde. Ein solches Precursorharz kann beispielsweise eine Phenol/Formaldehyd-Basis aufweisen. Beim Tränken der Fasern mit dem Harz ist Sorge zu tragen, dass nur der gewünschte Befestigungsbereich benetzt und verbunden wird. Nach dem Tränken wird das Harz beispielsweise bei einer Temperatur von 200 °C unter Schutzgas ausgehärtet. Die anschließende Pyrolyse erfolgt z.B. bei 850 °C ebenfalls in einer Schutzgasatmosphäre mit Inertgasen wie Stickstoff oder Argon. So entsteht eine im wesentlichen aus Kohlenstoff aufgebaute Matrixstruktur, in der die keramischen Fasern fest aber schonend verankert sind. Der bevorzugte Werkstoff für die Fasern/Borsten ist Siliziumkarbid (SiC), welches von "Endlosfasern" definierter Dicke abgeschnitten wird. Die Einbettung zusätzlicher Stoffe, z.B. in Partikelform, in die Kohlenstoffmatrix oder eine oberflächliche Beschichtung der Matrix ist im Rahmen der Erfindung durchaus möglich.

## Patentansprüche

1. Bürste für eine Bürstendichtung, mit einer Vielzahl von definiert angeordneten, keramischen Fasern, welche mit einem Teil ihrer Länge stoffschlüssig in einer einen Festkörper bildenden Matrix gehalten sind, **dadurch gekennzeichnet,**
**dass** die Matrix (2) weitgehend bis vollständig aus Kohlenstoff ( C ) besteht, der durch Pyrolyse eines Kunstharzes in Form eines sogenannten Precursorharzes (Kohlenstoffvorläufers) erzeugt ist.

2. Bürste nach Anspruch 1, **dadurch gekennzeichnet, dass** die Fasern (3) aus Siliziumkarbid (SiC) bestehen.

3. Bürste nach Anspruch 1 oder 2, **gekennzeichnet durch** die Verwendung für Bürstendichtungen in Turbomaschinen, insbesondere in Gasturbinen.

## Claims

1. Brush for a brush seal with a multitude of ceramic fibres arranged in a defined way which are bound with part of their length in a matrix forming a solid body
**characterised in that**
the matrix (2) consists extensively to completely of carbon (C), which through pyrolysis of a synthetic resin is produced in the form of a so-called precursor resin (carbon precursor).

2. Brush according to claim 1 **characterised in that** the fibres (3) consist of carborundum silicon.

3. Brush according to claim 1 or 2 **characterised** through use for brush seals in turbo-machines, in particular in gas turbines.

## Revendications

1. Balai pour une garniture d'étanchéité à balai, comprenant une pluralité de fibres céramiques disposées de manière définie, qui sur une partie de leur longueur sont maintenues par complémentarité de matière dans une matrice formant un corps solide, **caractérisé en ce que** la matrice (2) est réalisée en grande partie ou complètement en carbone (C) obtenu par pyrolyse d'une résine synthétique sous la forme de ce que l'on appelle une résine précurseur (précurseur de carbone).

2. Balai selon la revendication 1, **caractérisé en ce que** les fibres (3) sont en carbure de silicium (SiC).

3. Balai selon la revendication 1 ou 2, **caractérisé par** l'utilisation de garnitures d'étanchéité à balai dans des turbomachines, notamment dans des turbines à gaz.
